Europäisches Patentamt

(19) European Patent Office

Office européen des brevets

(11) EP 0 520 755 B1

(12) EUROPEAN PATENT SPECIFICATION

(45) Date of publication and mention
of the grant of the patent:
24.04.1996 Bulletin 1996/17

(51) Int. Cl.$^6$: B60C 11/04

(21) Application number: 92305779.8

(22) Date of filing: 24.06.1992

(54) **Heavy duty pneumatic tires**

LKW-Luftreifen

Bandages pneumatiques pour poids lourds

(84) Designated Contracting States:
DE FR GB SE

(30) Priority: 25.06.1991 JP 178974/91

(43) Date of publication of application:
30.12.1992 Bulletin 1992/53

(73) Proprietor: BRIDGESTONE CORPORATION
Tokyo 104 (JP)

(72) Inventor: Ikeda, Hiromichi
Tokyo (JP)

(74) Representative: Whalley, Kevin et al
MARKS & CLERK,
57-60 Lincoln's Inn Fields
London WC2A 3LS (GB)

(56) References cited:
DE-A- 2 029 844          US-A- 4 258 691
US-A- 4 446 901          US-A- 4 840 211

• PATENT ABSTRACTS OF JAPAN vol. 10, no. 40
(M-454)(2097) 18 February 1986 & JP-A-60 193
704 SUMITOMO GOMU KOGYO) 2 October 1985

## Description

The present invention relates to heavy duty pneumatic tires provided with three or more zigzag grooves extending in the tire-circumferential direction thereof. More particularly, the invention is aimed at the effective prevention of so-called river wear along edge portions of the zigzag grooves as well as prevention of entrapment of stones or gravel into the grooves.

For example, Japanese patent publication No. 50-22,282 discloses a technique for preventing river wear in a tire of this kind in which a plurality of zigzag grooves are provided in a treading surface of a tread, and extend in the circumferential direction of the tire.

As show in Figs. 2(a) to 2(c) of the accompanying drawings, according to Japanese patent publication No. 50-22,282, each zigzag groove 31 has side walls 32 and 33, which form intersecting angles $\epsilon$ and $\eta$ with normal lines to land portions of the tread. These angles $\epsilon$ and $\eta$ are made smaller at an axially projecting corner portion 34 of a land portion defined by the zigzag groove 31, and made greater at an axially retracting corner portion 35 of the land portion. This publication states that river wear is reduced by such a construction.

However, according to this technique, since the rigidity of the land portion at the axially retracting corner portion 35 becomes too high on the tread center side of the zigzag groove 31, uneven wearing unfavorably occurs there. In addition, since the intersecting angle $\epsilon$ of the groove wall 32 becomes too small at the axially projecting corner portion 34 of the land portion on the tread shoulder portion of the zigzag groove 31, a stone may be unfavourably entrapped in the zigzag groove 31, particularly during an initial wearing stage as illustrated by an imaginary line.

Attention is also drawn to the disclosure of US-A-4 449 601.

The present invention aims to provide a heavy duty pneumatic tire which can effectively prevent uneven wear of land portions defined by zigzag grooves and can also prevent entrapment of stones or gravel.

The present invention provides a heavy duty pneumatic tire comprising a tread having a treading surface provided with three or more zigzag grooves extending in a tire-circumferential direction, wherein opposed groove walls of each of at least the zigzag grooves which are located nearest to axial edges of the tread are each bent in a radially outer area spaced from the bottom of the zigzag groove as viewed in a tire-widthwise sectional plane, characterized in that the following inequalities are satisfied:

$$0.25 \leqq h/H \leqq 0.5,$$

$$\gamma_1 \leqq \alpha_1, \beta_1 \leqq \alpha_1, \gamma_1 \leqq \delta_1, \beta_1 \leqq \delta_1, \text{ and}$$

$$\gamma_2 \leqq \alpha_2, \beta_2 \leqq \alpha_2, \gamma_2 \leqq \delta_2, \beta_2 \leqq \delta_2,$$

in which:

(i) H is the radial depth of the zigzag groove, and h is the depth of a location where the groove wall is bent, as measured from an outer contour surface of the tread,

(ii) $\alpha_1$, $\beta_1$, $\gamma_1$ and $\delta_1$, define angles of a portion of the zigzag groove which is bent to axially outwardly project toward a shoulder portion of the tire,

$\alpha_1$ and $\beta_1$ forming intersecting angles between radially outer and inner areas of the groove wall on a shoulder side of the tread and normal lines to a land portion or an extension line thereof, respectively, and $\gamma_1$ and $\delta_1$ being intersecting angles between radially outer and inner areas of the groove wall on a center side of the tread and normal lines to a land portion of the tread or an extension line thereof, respectively, and

(iii) $\alpha_2$, $\beta_2$, $\gamma_2$ and $\delta_2$ define angles of a portion of the zigzag groove which is bent to axially inwardly project toward a central portion of the tire,

$\alpha_2$ and $\beta_2$ forming intersecting angles between radially outer and inner areas of the groove wall on a shoulder side of the tread and normal lines to a land portion of the tread or an extension line thereof, respectively and $\gamma_2$ and $\delta_2$ being intersecting angles between radially outer and inner areas of the groove wall on a center side of the tread and normal lines to a land portion of the tread or an extension line thereof, respectively.

According to the present invention, the following are preferred.

(a) $\beta_1 \geqq \beta_2$ and $\delta_1 \leqq \delta_2$.
(b) $17.5° \leqq \alpha_1, \alpha_2 \leqq 22.5°$ and $0° \leqq \gamma_1, \gamma_2 \leqq 5°$.
(c) $17.5° \leqq \alpha_1, \alpha_2 \leqq 22.5°, 0° \leqq \gamma_1, \gamma_2 \leqq 5°, 7.5° \leqq \beta_1 \leqq 12.5°, 22.5° \leqq \delta_1 \leqq 27.5°, 0° \leqq \beta_2 \leqq 5°, 27.5° \leqq \delta_2 \leqq 32.5°$.
(d) The number of the zigzag grooves provided in the treading surface of the tread in the circumferential direction of the tire is 3.

(e) The cross sectional shape of the zigzag groove extending in a central portion of the tread is laterally symmetrical as viewed in a cross sectional plane.

(f) All of the zigzag grooves satisfy the inequalities:

$$\gamma_1 \leq \alpha_1, \beta_1 \leq \alpha_1, \gamma_1 \leq \delta_1, \beta_1 \leq \delta_1, \gamma_2 \leq \alpha_2, \beta_2 \leq \alpha_2, \gamma_2 \leq \delta_2, \text{ and } \beta_2 \leq \delta_2$$

(g) $\beta_1 \geq \beta_2$ and $\delta_1 \leq \delta_2$.

For a better understanding of the invention, reference is made to the accompanying drawings, wherein:

Figs. 1(a) through 1(c) illustrate an embodiment of the present invention; and
Figs. 2(a) through 2(c) illustrate the conventional pneumatic tire.

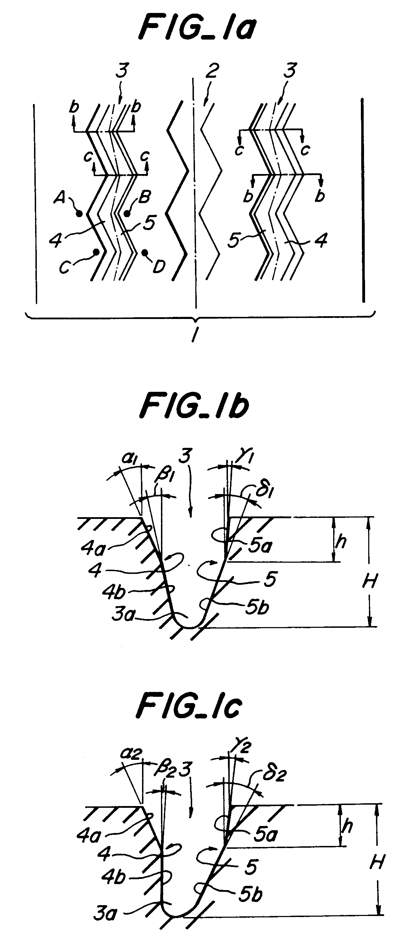

The present invention will be explained in more detail with reference to the specific embodiment of Fig. 1.

Fig. 1(a) is a plan view illustrating a tread pattern as an embodiment of the present invention. In this embodiment, three zigzag grooves 2, 3, 3 are formed at the same phase in a tread surface of a tread, extending in the circumferential direction of the tire. Among these zigzag grooves, each of two zigzag grooves 3, 3 located near opposite edges of the tread has opposed groove walls 4 and 5, which are bent in a radially outer area spaced from the bottom of the zigzag groove 3 as viewed in a tire-widthwise sectional plane as shown in Figs. 1(b) and 1(c). The groove walls 4, 5 are inclinedly bent, preferably smoothly. According to the present invention, the depth h of the location where the groove is bent and the depth H of the groove satisfy the following inequalities: $0.25 \leq h/H \leq 0.5$, when measured from the surface of the land portion of the tread.

Further, when various intersecting angles between portions of groove walls 4, 5 of the zigzag groove 3 being bent to axially outwardly project toward a shoulder or center portion of the tread and normal lines to a land portion of the tread or its extension (hereinafter referred to as "tread normal line") are defined as shown in Figs. 1(b) and 1(c) mentioned below, these intersecting angles satisfy the following inequalities:

$$\gamma_1 \leq \alpha_1, \beta_1 \leq \alpha_1, \gamma_1 \leq \delta_1, \beta_1 \leq \delta_1, \text{ and }$$

$$\gamma_2 \leq \alpha_2, \beta_2 \leq \alpha_2, \gamma_2 \leq \delta_2, \beta_2 \leq \delta_2,$$

In these inequalities, $\alpha_1$, and $\beta_1$, denote intersecting angles between tread normal lines and areas 4a and 4b located radially outwardly and inwardly relative to the bent position of a portion of the groove wall 4 on the shoulder side of the the zigzag groove 3, respectively, whereas $\gamma_1$, and $\delta_1$ denote intersecting angles between tread normal lines and areas 5a and 5b located radially outwardly and inwardly relative to the bent position of the groove wall 5 on a center side of the tread, respectively.

On the other hand, $\alpha_2$, $\beta_2$, $\gamma_2$ and $\delta_2$ define intersecting angles between tread normal lines and the groove walls 4, 5 of a portion of the zigzag groove which is bent to axially inwardly project toward a central portion of the tread, $\alpha_2$ and $\beta_2$ denoting intersecting angles between radially outer and inner areas 4a, 4b of the groove wall 4 on a shoulder side of the tread and tread normal lines, respectively, and $\gamma_2$ and $\delta_2$ being intersecting angles between radially outer and inner areas 5a, 5b of the groove wall 5 on a center side of the tread and tread normal lines.

According to the present invention, the following are preferred.

(a) $\beta_1 \geq \beta_2$ and $\delta_1 \leq \delta_2$.
(b) $17.5° \leq \alpha_1, \alpha_2 \leq 22.5°$ and $0° \leq \gamma_1, \gamma_2 \leq 5°$.
(c) $17.5° \leq \alpha_1, \alpha_2 \leq 22.5°, 0° \leq \gamma_1, \gamma_2 \leq 5°, 7.5° \leq \beta_1 \leq 12.5°, 22.5° \leq \delta_1 \leq 27.5°, 0° \leq \beta_2 \leq 5°, 27.5° \leq \delta_2 \leq 32.5°$.
(d) The number of the zigzag grooves provided in the treading surface of the tread in the circumferential direction of the tire is 3.
(e) The cross sectional shape of the zigzag groove extending in a central portion of the tread is laterally symmetrical as viewed in a cross sectional plane.
(f) All of the zigzag grooves satisfy the inequalities:

$$\gamma_1 \leq \alpha_1, \beta_1 \leq \alpha_1, \gamma_1 \leq \delta_1, \beta_1 \leq \delta_1, \gamma_2 \leq \alpha_2, \beta_2 \leq \alpha_2, \gamma_2 \leq \delta_2, \text{ and } \beta_2 \leq \delta_2$$

(g) $\beta_1 \geq \beta_2$ and $\delta_1 \leq \delta_2$.

According to the heavy duty pneumatic tire of the present invention, $\gamma_1 \leq \alpha_1$ and $\gamma_2 \leq \alpha_2$. As a consequence, entrapment of stones or gravel into the grooves can be effectively prevented. Further, $\beta_1 \leq \alpha_1$, $\gamma_1 \leq \delta_1$, $\beta_1 \leq \delta_1$, $\beta_2 \leq \alpha_2$, $\gamma_2 \leq \delta_2$, and $\beta_2 \leq \delta_2$ are combined with $\gamma_1 \leq \alpha_1$ and $\gamma_2 \leq \alpha_2$. As a consequence, although large ground-contacting pressure is applied to the groove wall 4 when the tire receives side forces, the ground-contacting pressure can be reduced through the bent portion being swelled out toward the interior of the groove. In addition, although large side forces are applied to the top portion of the groove wall 5, these side forces can be mitigated because rigidity is low at this top portion and this location is also likely to be swelled inside the groove. Therefore, railway wear can be sufficiently suppressed.

Further, when $\beta_1 \geq \beta_2$ and $\delta_1 \leq \delta_2$, rigidity of the groove wall in the axially projecting corner portion which is more likely to receive side forces is made smaller than at the groove wall in the axially retracting corner portion positioned on the same groove wall side and adjacent to the axially projecting corner portion. Consequently, rigidity of the entire tread can be made well balanced and the depth of the groove can be made small. Thus, railway wear can be prevented in an intermediate wearing stage and thereafter during which uneven wearing-suppressing effect due to movement (swelling) of the groove walls in the initial wearing stage as mentioned above becomes smaller.

In addition, when $0.25 \leq h/H \leq 0.5$, nuclei of uneven wearing can be prevented in the initial wearing stage, and entrapment of stones or gravel can be prevented. If $h/H$ is less than 0.25, a stone is likely to enter the groove deeper than the bent location, so that the stone entrapment-preventing effect is deteriorated. If $h/H$ is more than 0.5, rigidity on the side of the groove wall 4 becomes too low, and the swelling amount of the bent portion on the side of the groove wall 5 becomes smaller, so that good railway wearing-preventing effect cannot be obtained.

According to the present invention, the intersecting angles $\alpha_1$, $\alpha_2$, $\gamma_1$, and $\gamma_2$ preferably satisfy the following inequalities irrespective of the bending directions of the zigzag groove 3.

$$17.5° \leq \alpha_1, \alpha_2 \leq 22.5° \text{ and } 0° \leq \gamma_1, \gamma_2 \leq 5°$$

In this case, stone entrapment can be more effectively prevented.

In addition, when $\beta_1$, $\beta_2$, $\delta_1$, and $\delta_2$ further satisfy the following inequalities, the groove wall structure most suitable for the prevention of the railway wear can be realized.

$$7.5° \leq \beta_1 \leq 12.5°, 22.5° \leq \delta_1 \leq 27.5°,$$

$$\text{and } 0° \leq \beta_2 \leq 5°, 27.5° \leq \delta_2 \leq 32.5°$$

As mentioned above, in the pneumatic tire of the present invention, occurrence of uneven wearing on the land portion on the tread-center side of the zigzag groove 3 can be effectively prevented, and stone-entrapment in the portions of the zigzag groove 3 being bent to project toward the shoulder portion of the tread can be effectively prevented.

In the following, the present invention will be explained in further detail with reference to the accompanying drawings.

Fig. 1 illustrates one embodiment of the present invention. The internal reinforcing structure of this tire is the same as that of an ordinary radial tire, and illustration thereof is omitted.

As mentioned above, three circumferentially continuous zigzag grooves 2, 3, 3 are provided in a treading surface 1 of a tread. The width of the treading surface 1 is 204 mm, and that of each of the zigzag grooves 2, 3, 3 is 13.2 mm. As illustrated in Figs. 1(a) and 1(b), opposed groove walls 4, 5 of each of the zigzag grooves 3 located near a shoulder of the tread are both axially bent toward the shoulder of the tread at radially outer areas 4a, 5a, respectively, spaced from a groove bottom 3a of the zigzag groove 3 as viewed in a tire widthwise sectional plane, and $h/H$ is set at 0.254 in which $h$ and $H$ are depths of the bent location and the zigzag groove 3 as measured from the surface of the tread.

In this embodiment, with respect to a portion of the zigzag groove 3 being axially bent to project toward the shoulder of the tread, $\alpha_1 = 20°$, $\beta_1 = 10°$, $\gamma_1 = 0°$, and $\delta_1 = 25°$, in which $\alpha_1$ is an intersecting angle between a tread normal line and a radially outer area 4a of the groove wall 4 on the tread-shoulder side positioned on the radially outer side of the bent portion; $\beta_1$ is an intersecting angle between a tread normal line and a radially inner area 4b of the groove wall 4 located on the radially inner side of the bent portion; $\gamma_1$ is an intersecting angle between a tread normal line and a radially outer area 5a of the groove wall 5 on the tread-center side positioned on the radially outer side of the bent portion; and $\delta_1$ is an intersecting angle between a tread normal line and a radially inner area 5b of the groove wall 5 located on the radially inner side of the bent portion.

With respect to a portion of the zigzag groove 3 being axially bent to project toward the central portion of the tread, $\alpha_2 = 20°$ identical with $\alpha_1$, $\beta_2 = 0°$, $\gamma_2 = 0°$ identical with $\gamma_1$, and $\delta_2 = 30°$, in which $\alpha_2$ is an intersecting angle between a tread normal line and a radially outer area 4a of the groove wall 4 on the tread-shoulder side positioned on the radially outer side of the bent portion; $\beta_2$ is an intersecting angle between a tread normal line and a radially inner area 4b of the groove wall 4 ; $\gamma_2$ is an intersecting angle between a tread normal line and a radially outer area 5a of the groove wall 5 on the tread-center side; and $\delta_2$ is an intersecting angle between a tread normal line and a radially inner area 5b of the groove wall 5.

The thus constructed tire having a tire size of 10.00R20 was fitted to a steering wheel of a vehicle having a normal load of 10 tons, which was run over 20,000 km. Thereafter, a worn amount and a stone-entrapped state were checked. The results obtained are shown in Table 1.

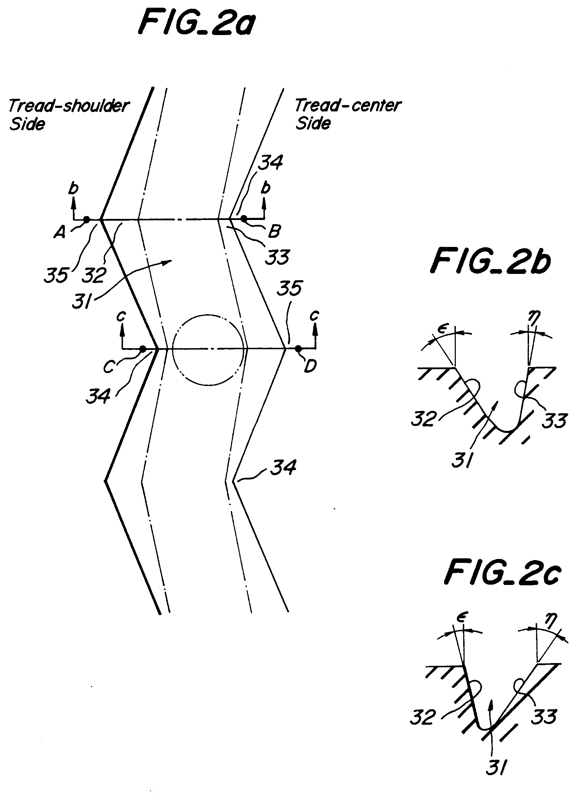

For comparison purpose, a conventional tire having the same construction as the test tire according to the present invention except that the groove wall structure was the same as in Fig. 2 was prepared, and similarly tested. The results obtained are also shown in Table 1.

In Table 1, A, B, C and D are locations shown in Figs. 1 and 2. With respect to the worn amount, the results are shown by index by taking those of the conventional tire as 100 as control tire. The greater the figure, the better is the result.

Table 1

|  |  | Conventional tire | Invention tire |
|---|---|---|---|
| Worn volume | location A | 100 | 105 |
|  | location B | 100 | 110 |
|  | location C | 100 | 105 |
|  | location D | 100 | 125 |
| Stone-entrapment (number of stones per groove) |  | 10 | 3 |

As is clear from Table 1, wearing state could be effectively improved at each of the locations A through D. Among them, at the location D, uneven wearing can be extremely effectively prevented. Further, the number of stones entrapped per one zigzag groove can be reduced to less than a half of that in the conventional tire.

Although the present invention has been explained with reference to the illustrated embodiment, zigzag grooves may be provided in a desired number not smaller than three. In this case, the technical idea of the present invention may be applied to all of these zigzag grooves. Alternatively, the zigzag groove extending in the central portion of the tread may be designed laterally symmetrical as viewed cross-sectionally, or may be designed in an appropriate shape depending upon necessity.

As is clear from the above explanation, according to the present invention, the formation of uneven wear nuclei can be sufficiently prevented in the initial wearing stage, so that progressing of the uneven wearing can be effectively suppressed after the initial wearing stage, and in addition stone-entrapment in the initial wearing stage can be sufficiently prevented.

**Claims**

1. A heavy duty pneumatic tire comprising a tread having a treading surface (1) provided with three or more zigzag grooves (3,2,3) extending in a tire-circumferential direction, wherein opposed groove walls (4,5) of each of at least the zigzag grooves (3) which are located nearest to axial edges of said tread are each bent in a radially outer area spaced from the bottom (3a) of the zigzag groove as viewed in a tire-widthwise sectional plane, characterized in that the following inequalities are satisfied:

$$0.25 \leqq h/H \leqq 0.5,$$

$$\gamma_1 \leqq \alpha_1, \beta_1 \leqq \alpha_1,$$

$$\gamma_1 \leqq \delta_1, \beta_1 \leqq \delta_1, \text{ and}$$

$$\gamma_2 \leqq \alpha_2, \beta_2 \leqq \alpha_2,$$

$$\gamma_2 \leqq \delta_2, \beta_2 \leqq \delta_2,$$

in which:

(i) H is the radial depth of the zigzag groove (3), and h is the depth of a location where the groove wall is bent, as measured from an outer contour surface of the tread,
(ii) $\alpha_1$, $\beta_1$, $\gamma_1$ and $\delta_1$ define angles of a portion of the zigzag groove (3) which is bent to axially outwardly project toward a shoulder portion of the tire,
$\quad$ $\alpha_1$ and $\beta_1$ forming intersecting angles between radially outer and inner areas (4a,4b) of the groove wall (4) on a shoulder side of the tread and normal lines to a land portion or extension line thereof, respectively, and

$\gamma_1$ and $\delta_1$ being intersecting angles between radially outer and inner areas (5a,5b) of the groove wall (5) on a center side of the tread and normal lines to a land portion of the tread or an extension line thereof, respectively, and

(iii) $\alpha_2$, $\beta_2$, $\gamma_2$ and $\delta_2$ define angles of a portion of the Zigzag groove (3) which is bent to axially inwardly project toward a central portion of the tire,

$\alpha_2$ and $\beta_2$ forming intersecting angles between radially outer and inner areas (4a,4b) of the groove wall (4) on a shoulder side of the tread and normal lines to a land portion or an extension line thereof, respectively, and $\gamma_2$ and $\delta_2$ being intersecting angles between radially outer and inner areas (5a,5b) of the groove wall (5) on a center side of the tread and normal lines to a land portion of the tread or an extension line thereof, respectively.

2. A pneumatic tire as claimed in claim 1, characterized in that $\beta_1 \geqq \beta_2$ and $\delta_1 \leqq \delta_2$.

3. A pneumatic tire as claimed in claim 1 or 2, characterized in that $17.5° \leqq \alpha_1$, $\alpha_2 \leqq 22.5°$ and $0° \leqq \gamma_1$, $\gamma_2 \leqq 5°$.

4. A pneumatic tire as claimed in any of claims 1 to 3, characterized in that $17.5° \leqq \alpha_1$, $\alpha_2 \leqq 22.5°$, $0° \leqq \gamma_1$, $\gamma_2 \leqq 5°$, $7.5° \leqq \beta_1 \leqq 12.5°$, $22.5° \leqq \delta_1 \leqq 27.5°$, $0° \leqq \beta_2 \leqq 5°$, $27.5° \leqq \delta_2 \leqq 32.5°$.

5. A pneumatic tire as claimed in any of claims 1 to 4, characterized in that the number of zigzag grooves (3,2,3) provided in the treading surface (1) of the tread in the circumferential direction of the tire is three.

6. A pneumatic tire as claimed in any of claims 1 to 5, characterized in that the cross-sectional shape of the zigzag groove (2) extending in a central portion of the tread is laterally symmetrical as viewed in a cross-sectional plane.

7. A pneumatic tire as claimed in any of claims 1 to 6, characterized in that all of the zigzag grooves (3,2,3) satisfy the inequalities: $\gamma_1 \leqq \alpha_1$, $\beta_1 \leqq \alpha_1$, $\gamma_1 \leqq \delta_1$, $\beta_1 \leqq \delta_1$, $\gamma_2 \leqq \alpha_2$, $\beta_2 \leqq \alpha_2$, $\gamma_2 \leqq \delta_2$, and $\beta_2 \leqq \delta_2$.

8. A pneumatic tire as claimed in claim 7, characterized in that $\beta_1 \geqq \beta_2$ and $\delta_1 \leqq \delta_2$.

**Patentansprüche**

1. Hochbelastbarer Luftreifen, der eine Lauffläche aufweist, die eine Kontaktfläche (1) hat, die mit drei oder mehr Zick-Zack-Rillen (3, 2, 3) versehen ist, die in der Laufrichtung des Reifens angeordnet sind, bei welchem gegenüberliegende Rillenwände (4, 5) von wenigstens jeder der Zick-Zack-Rillen (3), die den Axialrändern der Lauffläche am nächsten liegen, in einer in Radialrichtung äußeren Fläche, die einen Abstand zum Boden (3a) der Zick-Zack-Rille aufweist, gebogen sind, gesehen in der Schnittebene der Reifenbreite, dadurch gekennzeichnet, daß die folgenden Ungleichungen erfüllt sind:

$$0,25 \leqq h/H \leqq 0,5$$

$$\gamma_1 \leqq \alpha_1, \beta_1 \leqq \alpha_1,$$

$$\gamma_1 \leqq \delta_1, \beta_1 \leqq \delta_1, \text{ et}$$

$$\gamma_2 \leqq \alpha_2, \beta_2 \leqq \alpha_2,$$

$$\gamma_2 \leqq \delta_2, \beta_2 \leqq \delta_2,$$

in denen:

(i) H die Radialtiefe der Zick-Zack-Rille (3) ist und h die Tiefe an einer Stelle ist, an der die Rillenwand gebogen ist, gemessen von der äußeren Umrißfläche der Lauffläche,
(ii) $\alpha_1$, $\beta_1$, $\gamma_1$ und $\delta_1$ Winkel eines Abschnitts der Zick-Zack-Rille (3) definieren, der gebogen ist, um in Axialrichtung nach außen zu einem Schulterabschnitt des Reifens hin vorzustehen,

wobei $\alpha_1$ und $\beta_1$ Schnittwinkel zwischen in Radialrichtung äußeren und inneren Flächen (4a, 4b) der Rillenwand (4) auf einer Schulterseite der Lauffläche und senkrechten Linien zu einem Stegabschnitt der Lauffläche oder zu dessen Verlängerungslinie bilden und wobei $\gamma_1$ und $\delta_1$ Schnittwinkel zwischen in Radialrichtung äußeren und inneren Flächen (5a, 5b) der Rillenwand (5) auf einer Mittelseite der Lauffläche und der senkrechten Linie zu einem Stegabschnitt oder zu dessen Verlängerungslinie sind und (iii) $\alpha_2$, $\beta_2$, $\gamma_2$ und $\delta_2$ Winkel eines

Abschnitts der Zick-Zack-Rille (3) definieren, der gebogen ist, um in Axialrichtung nach innen zu einem Mittelabschnitt des Reifens hin vorzustehen,

wobei $\alpha_2$ und $\beta_2$ Schnittwinkel zwischen in Radialrichtung äußeren und inneren Flächen (4a, 4b) der Rillenwand (4) auf einer Schulterseite der Lauffläche und senkrechten Linien zu einem Stegabschnitt der Lauffläche oder dessen Verlängerungslinie bilden und wobei $\gamma_2$ und $\delta_2$ Schnittwinkel zwischen in Radialrichtung äußeren und inneren Flächen (5a, 5b) der Rillenwand (5) auf einer Mittelseite der Lauffläche und senkrechten Linien zu einem Stegabschnitt der Lauffläche oder zu dessen Verlängerungslinie sind.

2.  Luftreifen nach Anspruch 1, dadurch gekennzeichnet, daß $\beta_1 \geqq \beta_2$ und $\delta_1 \leqq \delta_2$.

3.  Luftreifen nach Anspruch 1 oder 2, dadurch gekennzeichnet, daß 17,5° $\leqq \alpha_1$, $\alpha_2 \leqq$ 22,5° und 0° $\leqq \gamma_1$, $\gamma_2 \leqq$ 5°.

4.  Luftreifen nach einem der Ansprüche 1 bis 3, dadurch gekennzeichnet, daß 17,5° $\leqq \alpha_1$, $\alpha_2 \leqq$ 22,5° und 0° $\leqq \gamma_1$, $\gamma_2 \leqq$ 5°, 7,5° $\leqq \beta_1 \leqq$ 12,5°, 22,5° $\leqq \delta_1 \leqq$ 27,5°, 0° $\leqq \beta_2 \leqq$ 5°, 27,5° $\leqq \delta_2 \leqq$ 32,5°.

5.  Luftreifen nach einem der Ansprüche 1 bis 4, dadurch gekennzeichnet, daß die Zahl der Zick-Zack-Rillen (3, 2, 3), die in der Kontaktfläche (1) der Lauffläche in der Laufrichtung des Reifens vorhanden ist, gleich drei ist.

6.  Luftreifen nach einem der Ansprüche 1 bis 5, dadurch gekennzeichnet, daß die Querschnittsform der Zick-Zack-Rille (2), die in einem mittleren Abschnitt der Lauffläche verläuft, seitlich symmetrisch ist, gesehen in einer Querschnittsebene.

7.  Luftreifen nach einem der Ansprüche 1 bis 6, dadurch gekennzeichnet, daß alle der Zick-Zack-Rillen (3, 2, 3) die folgenden Ungleichungen erfüllen: $\gamma_1 \leqq \alpha_1$, $\beta_1 \leqq \alpha_1$, $\gamma_1 \leqq \delta_1$, $\beta_1 \leqq \delta_1$, $\gamma_2 \leqq \alpha_2$, $\beta_2 \leqq \alpha_2$, $\gamma_2 \leqq \delta_2$ und $\beta_2 \leqq \delta_2$.

8.  Luftreifen nach Anspruch 7, dadurch gekennzeichnet, daß $\beta_1 \geqq \beta_2$ und $\delta_1 \leqq \delta_2$.

**Revendications**

1.  Pneumatique pour poids lourds comprenant une bande de roulement avec une surface (1) comportant trois ou plusieurs rainures en zig-zag (3, 2, 3), s'étendant dans une direction circonférentielle du pneumatique, dans lequel les parois de rainure opposées (4, 5) de chacune d'au moins les rainures en zig-zag (3) situées le plus près des bords axiaux de ladite bande de roulement sont chacune cintrées dans une zone radialement externe, espacée du fond (3a) de la rainure en zig-zag, comme vu dans un plan en coupe dans le sens de la largeur du pneumatique, caractérisé en ce que les inégalités suivantes sont satisfaites:

$$0,25 \leqq h/H \leqq 0,5$$

$$\gamma_1 \leqq \alpha_1, \beta_1 \leqq \alpha_1,$$

$$\gamma_1 \leqq \delta_1, \beta_1 \leqq \delta_1, \text{ et}$$

$$\gamma_2 \leqq \alpha_2, \beta_2 \leqq \alpha_2,$$

$$\gamma_2 \leqq \delta_2, \beta_2 \leqq \delta_2,$$

où:

(i) H représente la profondeur radiale de la rainure en zig-zag (3), h représentant la profondeur d'un emplacement où la paroi de la rainure est cintrée, comme mesuré à partir d'une surface de contour externe de la bande de roulement,

(ii) $\alpha_1$, $\beta_1$, $\gamma_1$ et $\delta_1$ définissant des angles d'une partie de la rainure en zig-zag (3), cintrée pour déborder axialement vers l'extérieur en direction d'une partie d'épaulement du pneumatique.

$\alpha_1$ et $\beta_1$ formant respectivement des angles d'intersection entre les zones radialement externes et internes (4a, 4b) de la paroi de rainure (4) sur un côté d'épaulement de la bande de roulement et des normales à une partie d'appui ou à une ligne d'extension correspondante, $\gamma_1$ et $\delta_1$ étant respectivement des angles d'intersection entre les zones radialement externes et internes (5a, 5b) de la paroi de rainure (5) sur un côté central de la bande de roulement et des normales à une partie d'appui de la bande de roulement ou à une ligne d'extension correspondante, et (iii) $\alpha_2$, $\beta_2$, $\gamma_2$ et $\delta_2$ définissant des angles d'une partie de la rainure en zig-zag, cintrée axialement vers l'intérieur, débordant vers une partie centrale du pneumatique,

$\alpha_2$ et $\beta_2$ formant respectivement des angles d'intersection entre les zones radialement externes et internes (4a, 4b) de la paroi de rainure (4) sur un côté d'épaulement de la bande de roulement et des normales à une partie d'appui de la bande de roulement ou à une ligne d'extension correspondante, et $\gamma_2$ et $\delta_2$ étant respectivement des angles d'intersection entre les zones radialement externes et internes (5a, 5b) de la paroi de rainure (5) sur un côté central de la bande de roulement et des normales à une partie d'appui de la bande de roulement ou à une ligne d'extension correspondante.

2. Pneumatique selon la revendication 1, caractérisé en ce que $\beta_1 \geq \beta_2$ et $\delta_1 \geq \delta_2$.

3. Pneumatique selon les revendications 1 ou 2, caractérisé en ce que $17,5° \leq \alpha_1$, $\alpha_2 \leq 22,5°$ et $0° \leq \gamma_1$, $\gamma_2 \leq 5°$.

4. Pneumatique selon l'une quelconque des revendications 1 à 3, caractérisé en ce que $17,5° \leq \alpha_1$, $\alpha_2 \leq 22,5°$, $0° \leq \gamma_1$, $\gamma_2 \leq 5°$, $7,5° \leq \beta_1 \leq 12,5°$, $22,5° \leq \delta_1 \leq 27,5°$, $0° \leq \beta_2 \leq 5°$, $27,5° \leq \delta_2 \leq 32,5°$.

5. Pneumatique selon l'une quelconque des revendications 1 à 4, caractérisé en ce que le nombre des rainures en zig-zag (3, 2, 3) agencées dans la surface (1) de la bande de roulement dans la direction circonférentielle du pneumatique correspond à trois.

6. Pneumatique selon l'une quelconque des revendications 1 à 5, caractérisé en ce que la forme de section de la rainure en zig-zag (2) s'étendant dans une partie centrale de la bande de roulement est latéralement symétrique, comme vu dans un plan en coupe.

7. Pneumatique selon l'une quelconque des revendications 1 à 6, caractérisé en ce que toutes les rainures en zig-zag (3, 2, 3) satisfont aux inégalités suivantes: $\gamma_1 \leq \alpha_1$, $\beta_1 \leq \alpha_1$, $\gamma_1 \leq \delta_1$, $\beta_1 \leq \delta_1$, $\gamma_2 \leq \alpha_2$, $\beta_2 \leq \alpha_2$, $\gamma_2 \leq \delta_2$, et $\beta_2 \leq \delta_2$.

8. Pneumatique selon la revendication 7, caractérisé en ce que $\beta_1 \geq \beta_2$ et $\delta_1 \geq \delta_2$.

## FIG_1a

## FIG_1b

## FIG_1c

# FIG.2a

Tread-shoulder
Side

Tread-center
Side

# FIG.2b

# FIG.2c